# EUROPEAN PATENT APPLICATION

(11) **EP 0 917 817 A1**
(43) Date of publication of application: **26.05.1999**
(21) Application number: 97203591.9
(22) Date of filing: 18.11.1997
(51) Int. Cl.: A01C 1/00, A01C 11/02, A01G 9/10

(54) **Method and means for arranging for, and facilitating, the transplanting and re-potting of plants germinated in seed trays**

(71) Applicant: POLISETTE S.R.L., 43038 Sala Baganza (Parma) (IT)
(72) Inventor: Azzali, Marcello, 43100 Parma (IT)
(74) Representative: Corradini, Corrado

(57) **Abstract**

In a method for transplanting plants (5) germinated in seed trays (1) consisting of a rectangular slab of expanded synthetic material comprising an ordered plurality of seed cells (2), the seed trays, with the plants contained in their respective cells together with their growth layer (7), are divided into a number of portions or pots (100) equal to the number of seed cells, after which said pots are planted automatically.

## Description

This invention relates in a totally general manner to the intensive cultivation of plants in general, as for example in nurseries and in vegetable production.

More particularly, the invention relates to the handling and production of plants germinated in trays commonly known as seed trays.

Even more specifically, the invention concerns the transplanting and re-potting of plants germinated, typically but not exclusively as will be apparent hereinafter, in seed trays of the type described in Utility Model Application No. RE93U000088 filed in the name of the present applicant.

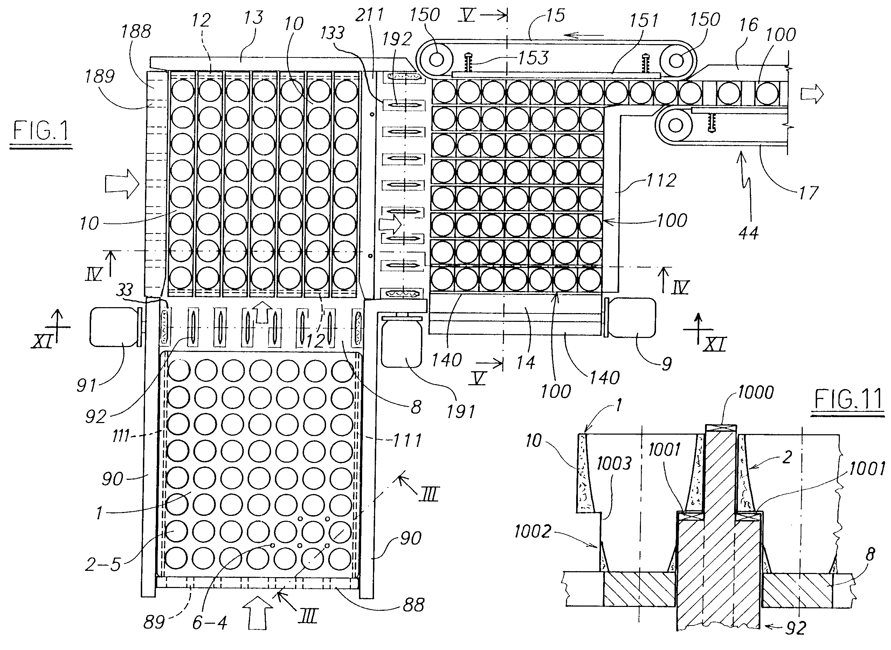

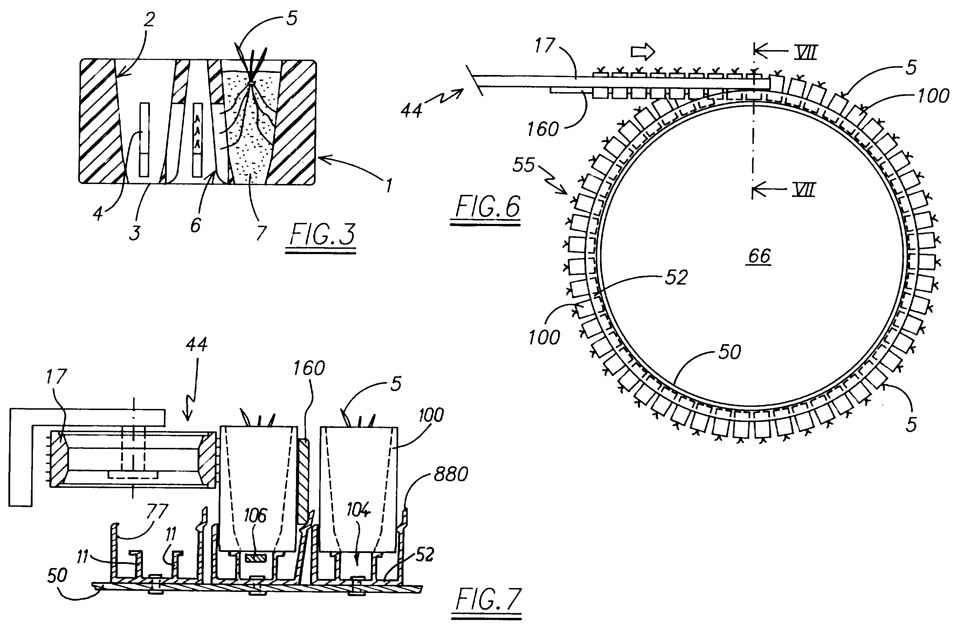

Said seed tray, also shown in the accompanying Figures 1 and 3, in which it is indicated by 1, comprises a flat rectangular slab of expanded synthetic material, typically polystyrene, comprising a plurality of identical seed cells 2 distributed as a matrix comprising n rows and m columns.

The cells 2 are flared upwards and are provided lowerly with a hole 3 for discharging the irrigation water, between them there being provided a multiplicity of through apertures 6 which communicate with the surrounding cells 2 via at least one transverse window 4.

The purpose of said at least one window 4 is to allow passage of at least a part of the roots of the plant 5 grown in its own seeding layer 7, this latter usually consisting of peat or mould.

For further details reference should be made to the aforesaid document.

It should be noted that the invention is also suitable for seed trays in which the cells 2 are provided with said through apertures 6 and said transverse windows 4, but have a closed base about a millimetre thick, usually between 0.5 and 1.5 mm.

In particular, and as is well known to the expert of the specific art, cells with a holed base are typically suitable for plants with a root system extending only laterally or radially, whereas cells with a closed base are typically suitable for plants with a root system extending only longitudinally, known as a taproot.

Basically, the purpose of a closed base is to prevent further longitudinal development of the taproot once this has reached said closed base, so as to avoid the evident problems which would otherwise arise with a holed base, by the escape of the taproot from the base of the seed tray. The taproot subsequently follows its normal development once the plant has been transplanted.

A further purpose of said closed base is to prevent complete drainage of the irrigation water, in the case of certain plants, with or without a taproot, which for correct development require a water quantity greater than that required for other types of plants.

In all cases, on termination of the germination stage the plants are transplanted either into growing seed trays (or pots) with larger cells than the germination cells, this operation being usually known as re-potting and being typical of a nursery, or in the soil (typically in open land) and typical of intensive vegetable production. The invention relates to both the said working methods, as defined hereinafter.

The invention is also suitable for seed trays of usual type, ie provided with cells with a holed base and a solid side wall.

When said plants 5 are to be transplanted, typically in open land, the respective germination seed trays 1 are loaded onto a suitable transplanting machine, on which there is also at least one operator who extracts the individual plants 5 from the respective cells 2 by gripping them at the base of the stem or of the group of leaves, and feeds them to that device of said machine which buries the plant 5 together with the relative growth layer 7.

No further details of the transplanting machine will be given as these are well known to the expert of the specific sector.

The aforesaid known transplanting method suffers from certain drawbacks, which are briefly as follows:
- firstly, manually extracting the plants from their cells can seriously damage them, in particular in the case of plants without a stem, or comprising only leaves, such as short or long leaf lettuce;
- secondly said at least one operator required for each transplanting machine is compelled to carry out repetitive operations and involves a not indifferent cost;
- finally there are problems of salvaging and/or disposing of the empty seed trays.

Such problems also arise on re-potting, in particular those relative to possible damage to plants, because very often their root system is firmly attached to the wall and to the sharp parts of the respective cell.

In all cases, said manual extraction subjects the plant to "traumatic" stresses and deformation which afterwards retard correct development as the plant has to recreate or restore optimum conditions for its growth in the new environment.

The main object of this invention is to provide a method and the means for its implementation, which are able to eliminate the aforesaid drawbacks within the context of a simple and rational construction.

This is attained, according to the method of the invention, by dividing the seed trays of any type mentioned in the introduction, with the plants inserted into their cells ready for transplant, into a number of portions (hereinafter known as pots) equal to the number of cells of the complete seed tray, and automatically planting said plants together with the relative pots.

The cells can have their base holed or solid, in the second case at least part of said closed base being automatically broken before the plants are transplanted.

In addition, after said division and before said planting, said pots are arranged in an ordered manner on a large capacity disposable support which is typically intended to be transferred towards the place of transplant where it is loaded onto a transplanting machine. It is evident that the same disposable support can be used for re-potting the plants.

For the aforesaid objects the said means for implementing the method comprise, starting with seed trays having n rows and m columns of seed cells (pots), these latter having a holed or unholed base, at least one cutting unit provided to divide each seed tray into a number of portions equal to the number of seed cells or pots; an ordering unit for arranging said pots in a line in which they are distributed at a constant pitch; at least one storage unit for the ordered accumulation of a plurality of said pots; and a unit for automatically planting the individual pots with the respective plants contained therein.

For example said at least one cutting unit can consist of a horizontal grid of crossed heated wires which is driven with to-and-fro movement relative to a horizontal operating table along which the seed trays slide.

In a preferred embodiment, said at least one cutting unit comprises a first cutting unit having a coplanar set of equidistant vertical heated wires and arranged to divide the seed tray into a number of strips equal to the number of its constituent rows or columns, and a second cutting unit having a coplanar set of equidistant vertical heated wires which is perpendicular to the preceding, and divides said strips into the corresponding number of cells or pots.

Said heated wires can evidently be replaced by rotary circular blades, in particular if wet seed trays 1 are to be cut (and which would inconveniently cool said wires), or seed trays containing in its cells plants having a foliage which passes beyond the plan outline of the respective pot (which would damage said foliage).

According to a particular embodiment said first and second cutting unit each preferably consist of a set of equidistant, coaxial rotary circular blades, said two sets of blades being mutually perpendicular and being associated with an operating table along which the seed trays or said strips are made to slide respectively.

Preferably the number of blades of each set exceeds by one the number of cells present in the rows or columns of the seed tray, in order to also eliminate at least one edge of the seed tray and obtain pots having the same transverse dimensions for the reasons which will become apparent hereinafter.

According to a modification, typically suitable for seed trays the cells of which have a holed base and a solid side wall, the intermediate blades of said first cutting unit are each provided with three cutting edges, namely a central one of greater diameter and two opposing lateral ones of smaller but equal diameter.

The purpose of the central cutting edge, as stated, is to cut the seed tray into strips, while the lateral cutting edges form along the lower longitudinal edges of said strips two undercuts of dimensions such as to intersect the cells.

In this manner the pots present themselves for transplant (or re-potting) with two passages or apertures which, after the pot has been buried, allow optimum development of the radial root system of the plants.

There is nothing to prevent said blades with three cutting edges being positioned in correspondence with said second cutting unit, but this is inadvisable because of the fact that the pots leaving said second cutting unit would then require to be rotated to allow them to be correctly gripped by said ordering unit.

The ordering unit preferably consists of an endless moving flexible element provided with an outer surface of high friction coefficient which has a rectilinear portion facing a parallel guide against which the pots made to advance by said flexible element laterally rest. Said rectilinear portion and said guide are spaced apart by a distance practically equal to the corresponding transverse dimension of the pots, which are inserted between them on leaving said second cutting unit.

In a preferred embodiment, with said moving flexible element, for example consisting of a band provided with small projecting metal points, there are associated a plurality of guides forming a series of channels for receiving the rows of pots leaving the second cutting unit, and feeding them to the flexible element in succession. Said plurality of guides can be provided for example by a slat conveyor or a finned belt made to move stepwise.

The storage unit comprises a conveying line, of which the upstream end is arranged to receive the pots originating from the ordering unit, and the downstream end is arranged to position said pots on an accumulator device which, once filled, is transferred to the place of transplant (or re-potting) and loaded onto the transplant (or re-potting) unit. Said conveying line preferably consists of a moving band provided with small projecting points and associated with a forward counteracting guide for the sliding of the pots, said accumulator device preferably consisting of a cylindrical body externally provided with a helically extending seat within which the lower portions of the pots are inserted.

Specifically, said seat consists of a sort of channel of width substantially equal to the corresponding transverse dimension of the pots, and with its side walls internally provided with members, for example in the form of reliefs or projections, which are arranged to prevent untimely release of the pots. At least one of said side walls is elastically flexible transversely to its thickness to allow easy insertion of the pots without any danger of damage.

With said accumulator device there is also associated a service implement which maintains it in a loaded configuration in which it is positioned tangential to said conveying line, and subjects it to a screwing movement about itself at a peripheral speed of rotation equal to the speed of movement of said conveying line.

Finally, said automatic planting unit, typically for transplanting in open land, is of the type comprising a towed or carried frame provided with usual means for planting plants, and provided according to the invention with a support and control implement for said accumulator device, for example of the aforesaid type, and a discharge means, for example similar to the aforesaid conveying line, which removes the pots from said accumulator device and presents them to said planting means.

The automatic planting unit typically for re-potting comprises at least one support and operating implement for at least one accumulator device, at least one service device which discharges the pots from said at least one accumulator device, and a flat support provided for supporting an ordered plurality of re-potting cells (or pots) having larger dimensions than the cells (or pots) of the cut seed trays, and arranged to move relative to said service device synchronously with the frequency of arrival of the pots presented by this latter.

According to the invention, said implement for supporting and operating the accumulator device during pot loading and discharge preferably consists of a stationary horizontal shaft projecting from a support and having a threaded portion arranged to engage a central threaded bush provided at one end with a drum coaxial to said shaft.

On the drum there can be removably mounted at least one accumulator device, between said support and said threaded portion there being provided a rotatable member having at least projecting rod to be slidingly received in a respective seat in said drum, so that as a result of the rotation of said at least one rod, the drum and hence also the accumulator device are subjected to said screwing movement about themselves.

Finally, in the case of seed trays with solid cells, or with a closed base, according to the invention there is provided upstream of said ordering unit a unit for at least partially breaking off said closed base.

Preferably said breaking unit consists of a milling cylinder rotating about a horizontal axis and projecting slightly above either said operating table or a seed tray arrival platform positioned upstream of this latter.

The operating stages of the method of the invention, and the preferred means for its practical implementation, will be apparent from the ensuing detailed description given with reference to the accompanying drawings, on which:
Figure 1 is a partial view from above showing the means for sectioning the seed trays with the plants to be transplanted contained in the relative cells with their growth material;
Figure 2 is a partial view from above showing the means for the ordered accumulation of the individual pots obtained using the means of Figure 1;
Figure 3 is a section on the line III-III of Figure 1 to an enlarged scale;

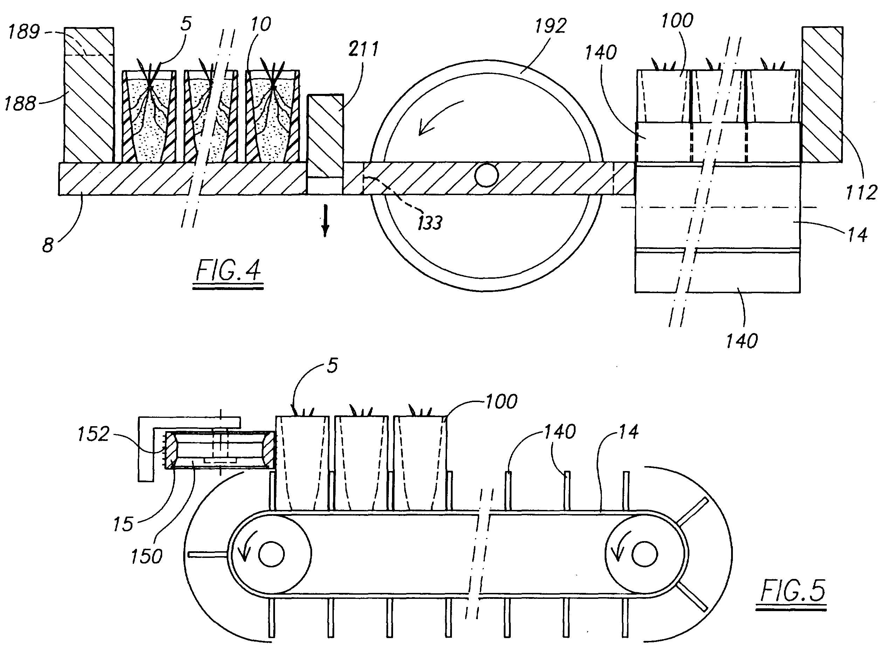

Figure 4 is a section on the line IV-IV of Figure 1 to an enlarged scale;
Figure 5 is a section on the line V-V of Figure 1 to an enlarged scale;
Figure 6 is a schematic view in the direction VI of Figure 2;
Figure 7 is a section on the line VII-VII of Figure 6 to an enlarged scale;
Figure 8 is a sectional elevation of a preferred embodiment of an implement for supporting and operating at least one accumulator device during pot loading and discharge;
Figure 9 is a schematic view from above showing a planting (more precisely transplanting) unit equipped according to the teachings of the invention;
Figure 10 is a view in the direction X of Figure 9; and
Figure 11 is a part of the section on the line XI-XI of Figure 1, showing an alternative embodiment of the circular blades provided for dividing into strips those seed trays provided with cells having a holed base and a solid side wall.

Firstly it should be noted that for reasons of clarity Figure 1 does not show the plants, and for the details of the seed tray, with holed-base cells 2, reference should be made to the introduction.

The full trays 1 originating from the place of germination of the plants 5 are presented, by any device suitable for the purpose, to the upstream region of a horizontal operating table 8 (Figure 1).

Said upstream region is provided with two lateral retention and slide guides go for the tray 1, an end transverse pusher 88 and a transverse opposing series of equidistant, coaxial circular thin blades 92 rotated by a motor unit 91.

Said pusher 88 is of comb shape, ie is provided with recesses 89 enabling it to pass beyond said blades 92. The pusher 88 is preferably also able to be shifted in height to facilitate the loading of the trays 1.

As can be seen, the number of blades 92 is one more than the number of columns of cells 2 present in the tray 1 so as to divide this latter into a series of strips 10 having the same width. The two outer or end blades 92 have a thickness (or useful operating width) greater than that of the intermediate blades, in order to disintegrate the edge strips 111 of the tray 1. This is well illustrated in Figure 1, where it can also be seen that with said blades 92 there are associated respective apertures 33 which open into an underlying suction collector (not visible) which removes and collects the off-cuts.

The region downstream of the operating table 8 comprises a vertically movable guide 211 aligned with one of said guides 90. a perpendicular guide 13 parallel to the series of blades 92, and an opposing pusher 188 which when in the retracted position is aligned with the other guide 90. Beyond said guide 211 there is a series of coaxial, equidistant, thin circular blades rotated by a motor unit 191.

Although not illustrated in detail, it should be noted that said blades 92 and 192 preferably have a sawtooth cutting edge, the teeth of which are of set type. In addition, the two outer or end blades 192 are thicker than the intermediate blades, in order to disintegrate the end portions 12 of the strips 10 which were obtained from the tray 1 by the action of the blades 92. Said blades 192 are associated with respective apertures 133 which communicate with an underlying collector (not visible) for drawing off and collecting the off-cuts.

The pusher 188 is provided with recesses 189 to enable it to pass beyond said blades 192, the number of blades being one more than the number of cells 2 present in the strips 10. The reason for this is to divide the strips 10 into a number of identical pots 100 equal to the number of cells 2 present in them.

Evidently instead of the blades 92 and 192 equivalent means can be provided, for example in the form of heated vertical wires, in which case the pushers 88 and 188 will have the form of horizontally lying combs. Said two cutting units with heated wires could also be incorporated into a single unit, for example consisting of a horizontal grid of crossed heated wires driven to move vertically.

It should be noted that the preferred embodiment is one using circular blades because it can be used in any situation, even for very wet seed trays or for trays containing plants 5 the foliage of which extends beyond the plan outline of the pots 100, as stated in the introduction.

The aforesaid means, and those to be described hereinafter, are convenient for seed trays 1 with cells 2 having either a holed base or a closed base. In the second case, the means of the invention are preferably provided with a unit for eliminating or breaking off at least part of said closed base. For example said breakage unit can consist of a milling cylinder rotating about a horizontal axis and associated either with said operating slide table 8 for the trays 1 or an arrival platform for these latter which is positioned upstream of said operating table.

Said milling cylinder, not shown because it is of simple implementation for an expert of the specific sector, is received height-adjustable within a respective aperture in said table or platform and projects beyond this latter by a distance such as to remove the bottom layer of the tray 1, so simultaneously removing the closed bases of the cells 2.

By this means, the pots 100 can be fed to transplanting, as state hereinafter. The milling cylinder could be excluded if the plants contained in closed-base cells are intended for re-potting.

Returning to Figure 1, it can be seen that the rows of pots 100 leaving the blades 192 are inserted, practically as an exact fit, into the compartments presented by a finned belt 14 driven stepwise by a suitable motor unit 9.

On termination of said insertion the front pots of said rows rest against a guide 112, the downstream end of which is bent at a right angle and is aligned with the second upper fin 140 of said belt 14 (Figure 1).

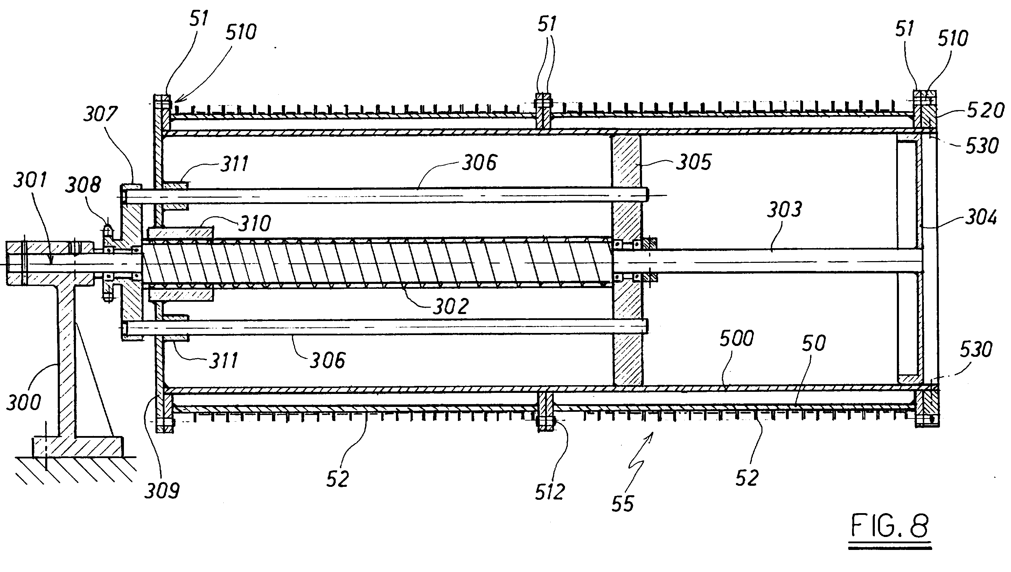

In front of said second fin 140 (also see Figure 5) there is a flexible element, in the example in the form of a band 15, extending endlessly between two pulleys 150 of vertical axis, the downstream pulley being driven by a motor unit, not shown, with intermittent motion.

The outer face of said band 15 has a high friction coefficient, which in the example is provided by a plurality of small projecting metal points 152 (Figure 5). These latter project beyond the rear face of the first upper fin 140 (again see Figure 5) so that they become inserted in the material of the first row of pots 100 at the moment of their transfer onto the belt 14.

It should be noted that during said transfer the band 15 is stationary, the respective upstream drive pulley being mounted on its shaft by way of a free-wheel device. With the rear of the active portion of said band there is associated a guide and slide element, indicated by 151 in Figure 1, which is constantly urged elastically outwards by a series of compressed springs 153.

On termination of said transfer the band 15 receives the enabling command to move through one step in order to present the first row of pots 100 to an accumulation and transport line 44 for these latter, after which it halts to await the next row, the cycle being repeated identically until the belt 14 has been completely unloaded.

The transport and accumulation line 44 operates intermittently, in synchronism with the band 15, and is preferably driven by a motor unit with an incorporated variable speed gear in order to regulate the distance between the pots 100 on the basis of the type of plants being handled.

Basically, along the line 44 there is created an alignment of pots 100, said line 44 comprising a retaining and slide guide 16 for the pots, and a forward advancement band 17 identical to the band 15. The downstream end of said guide 16 consists of a thin flat insertion strip 160, the purpose of which will be apparent hereinafter.

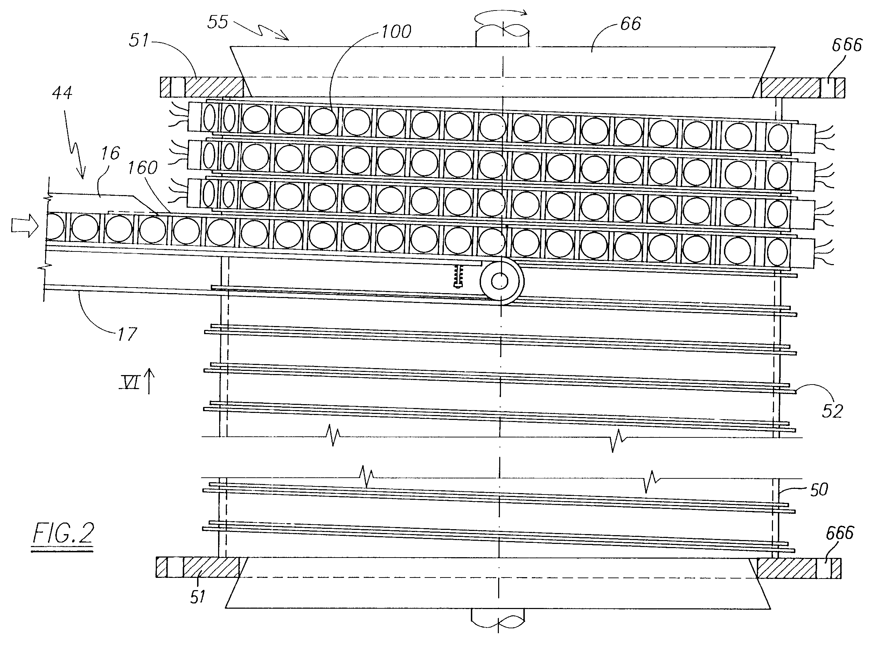

As can be seen in Figures 2, 6 and 7, the downstream end of the line 44 is tangential to an accumulator device 55 which comprises:
- a rigid hollow cylindrical body 50 of horizontal axis,
- two centrally holed end flanges 51 provided with a circumferential series of angularly equidistant through holes 666, further described hereinafter,
- and an elastically deformable channel 52, for example consisting of a relatively soft synthetic material, which is fixed to the exterior of the body 50 in a helical pattern (see Figure 2).

The inner faces of the side walls of said channel 52 comprise longitudinal ribs or projections 77 to retain the pots 100 (see Figure 7). One of said side walls extends beyond the opposing wall by means of a total-length lip 880 which projects outwards from the wall to which it is connected. The depth of the channel is less than the height of the pots 100, its width being practically equal to the corresponding transverse dimension of said pots 100.

From the base wall of said channel there extend two total-length fins 11 which straddle the longitudinal axis of said base wall. The upper edges of said fins 11 act as a support for the pots 100 when they are loaded onto the accumulator device 55, between said fins 11 there being presented a groove 104 for receiving a flat extraction strip 106 for the support and sliding of the pots 100 on their discharge from said device 55. Said flat strip 106 has been shown in Figure 7 for clarity, but it is in fact associated with the discharge means of the accumulator device 55 described hereinafter.

As shown in Figure 6, said accumulator device is removably supported by a sort of clamp which comprises two frusto-conical plugs 66 movable towards or away from each other and arranged to engage in the central holes of said flanges 51. The plugs 66 are rotatably mounted on a movable structure and are provided with a motor unit for rotating the accumulator device 55 at a peripheral speed equal to the speed of movement of the line 44, and in synchronism with it.

In its turn, said movable structure causes the device 55 clamped between the plugs 66 to slide axially, so that the combination of said two movements causes the channel 52 to undergo a screwing movement relative to the downstream end of the line 44, which is coupled to the channel 52 as shown in Figure 7. During the filling of the accumulator device 55 the flat strip 160 maintains the corresponding side wall of the channel 52 inclined outwards via the lip 880, so that the arriving pots 100 firstly freely rest on the fins 11 extending from the base of the channel 52 and are then gripped between the side walls of the channel when this assumes its original configuration.

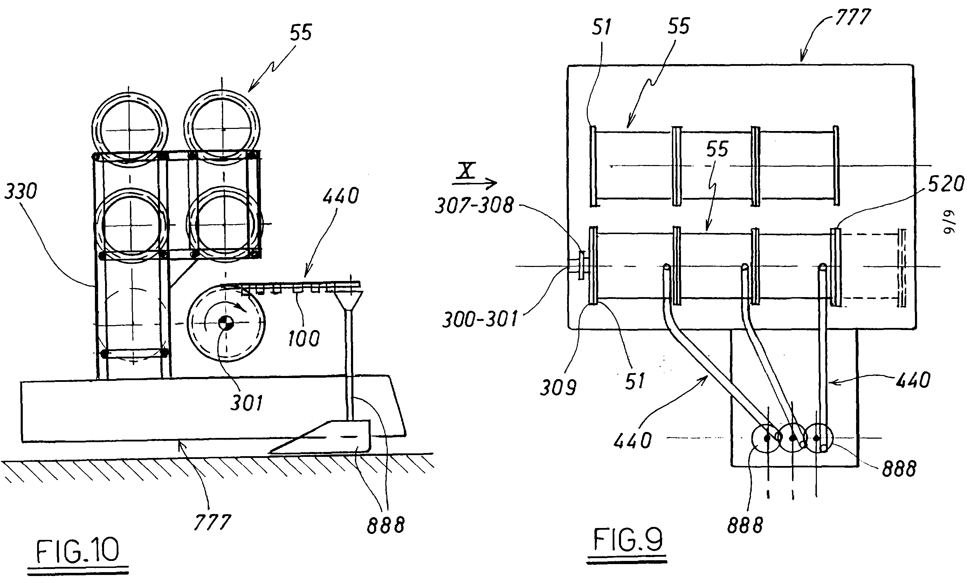

The accumulator devices 55 can be used either one at a time or in groups of two (see Figure 8), three (see Figure 9) or more, for the reasons which will be apparent hereinafter.

It should be noted that if the plants 5 are to be re-potted in situ, the respective pots 100 can be automatically inserted into larger dimension cells (or pots) using said transport and accumulation line 44. For this purpose, said larger-dimension cells (or pots) are made to travel across the downstream (stationary) end of the line 44 synchronously with the frequency of arrival of the pots 100 presented by the line.

In contrast, if the re-potting is to be done distant from the place in which the trays 1 are cut into sections, the pots are loaded onto the accumulator devices 55 as stated, and transferred to the re-potting site.

In a preferred embodiment, the means provided for supporting and operating the accumulator device or devices 55, both for the loading and for the unloading of the pots 100, are formed as shown in Figure 8. They comprise a vertically extending support 300, to the top of which there is fixed a horizontal projecting shaft 301.

This shaft has a greater-diameter threaded portion 302 at the same end as the support 300, and a lesser-diameter cylindrical portion 303 at the opposite end. On the free end of the portion 303 there is fixed a disc 304 with an inwardly projecting skirt of outer diameter virtually equal to the inner diameter of the enclosing drum 500, at the connection between the portion 303 and the portion 302 there being mounted, rotatable but axially locked, a circular plate 305 of outer diameter equal to the inner diameter of the drum 500.

Said circular plate 305 comprises at least two diametrically opposing through holes into which two cylindrical rods 306 are inserted, and projectingly fixed in a disc 307 rotatably mounted on the shaft 301 in proximity to the support 300. The disc 307 is also provided with a drive gear 308 linked to a convenient drive unit, not shown.

In front of the disc 307 there is a circular plate 309 which is fixed to the end of the drum 500, and is provided centrally with a threaded bush 310 engaging the threaded portion 302 of the shaft 301, and comprises two diametrically opposing sleeves 311 for the passage of the rods 306. In the illustrated example the drum 500 has a length slightly double the length of an accumulator device 55, the distance between the circular plate 309 and the disc 304 being slightly less than the length of the drum 500, and the length of the threaded portion 302 being practically equal to the sum of the length of the accumulator device 55 and the length of the bush 310. Said end plate 309 of the drum 500 is provided with pegs 510 arranged to engage in the holes 666 (see Figure 2) of the facing flange 51 of the accumulator device 55, the opposite end of the drum 500 being provided with a removable ring 520.

This latter is also provided with pegs 510 for insertion into the holes 666 of the facing flange 51, and comprises suitable retention members 530, such as latches or the like, by which it can be locked to the drum 500 in terms both of rotation and of axial sliding. Finally, the facing flanges 51 of the two accumulator devices 55 mounted at that moment on the drum 500 are fixed together by means, such as bolts, indicated by 512.

When the aforedescribed elements are in the configuration shown in Figure 8, rotation of the disc 307 causes the drum 500 to undergo a screwing movement, with the respective lines 44 loading the pots 100 into the channel 52 (as stated). On termination of loading, the drum 500 extends beyond the disc 304, where it is supported by said disc 304 and the circular plate 305, after which the two accumulator devices 55 can be removed after releasing the ring 520 and possibly the means 512.

Convenient means are provided for mounting and removing the accumulator devices 55 on and from the drum 500, such as gripper devices arranged to engage the holes 666 of the flanges 51 of said accumulator devices 55.

Once filled, the accumulator devices 55 are transferred either to the re-potting location as stated, or to the transplanting site, where they are loaded onto a transplanting machine modified for the purpose, and which forms one of the means for implementing the proposed transplant method.

As shown in Figure 10, according to the invention the full accumulator devices 55 directed to the transplanting machine and the empty ones originating from this latter are preferably arranged on suitable transfer tables for transport. Said means comprise a wheel-mounted platform or truck (self-propelled or not) on which a framework 330 is removably positioned (Figure 10) for the temporary storage of an ordered plurality of accumulator devices 55.

In the illustrated example (see Figures 9 and 10) said framework 330 comprises five accumulation compartments, each containing a group of three coaxial accumulator devices 55 connected together by the means 512 already described with reference to Figure 8. When the said truck reaches the transplanting machine, indicated schematically by 777 in Figures 9 and 10, the framework 330 present on this latter (containing empty devices 55) is loaded onto said truck, from which the corresponding framework 330 (containing full devices 55) is unloaded onto the transplanting machine 777.

Said exchange is effected by a handling system, not shown as it is easily implemented by an average expert, which forms part of said truck. The transplanting machine 777, which comprises a towed or carried frame provided with usual means 888 (see Figure 10) for planting plants together with their respective growth material, but which has not been shown in detail as it is well known to the expert of the art, is provided according to the invention with means of the type already mentioned with reference to the loading of the pots 100 into the channels 52 of the accumulator devices 55.

Hence the transplanting machine 777 comprises according to the invention a shaft 301 for supporting and operating the accumulator devices 33, a handling system for transferring empty devices 55 from the shaft 301 to the framework 330 and the full devices from this latter to the shaft 301, and a series of service lines 440 of a number equal to the number of accumulator devices 55 which can be accommodated on the shaft 301, each of which connects a accumulator device 55 to a respective planting means.

At this point it should be noted that with the upstream end of each service line 440 there is associated a flat strip 106 mentioned with reference to Figure 7. As an alternative to the embodiment shown in Figure 9, the shaft 301 provided on the transplanting machine 777 can be sized to support and operate only one accumulator device 55, and be provided with a single service line 440 with the downstream end of which there is associated a suitable deviator unit for presenting the arriving pots 100 in rapid succession to the feed means leading to the underlying series of planting means 888.

The aforesaid considerations substantially apply if the pots 100, or rather the plants 5, are to be re-potted. In this respect, on the re-potting site there is provided at least one shaft 301 for supporting and operating at least one accumulator device 55, at least one service line 440 for this latter, and at least one support plate on which the re-potting seed trays (or pots) are positioned, and which is arranged to move relative to said at least one service line 440 synchronously with the flow of pots 100 presented by this latter.

With reference to Figure 11 it can be seen that each blade 92 has a shaped profile which is particularly convenient for seed trays 1 of usual type, ie provided with cells 2 having a holed base and a solid side wall.

As can be seen, said blade 92 comprises a central circular cutting edge 1000 and two opposing lateral cutting edges 1001 of smaller diameter. The dimensions of the central cutting edge 1000 are such as to divide the tray 1 into strips 10, the dimensions of the lateral cutting edges 1001 being such that along the lower longitudinal edges of the strips 10 two recesses 1002 are formed which communicate with the cells 2 via the passages indicated by 1003.

The purpose of these latter was stated in the introduction.

The stages of the method, and the operation of the means for its practical implementation, are evident from the aforegoing and from an examination of the accompanying figures.

The advantages of the invention compared with the known art defined in the introduction are apparent, and can be summarized as follows:
- plant integrity is ensured by the fact that they are not manipulated in any way,
- no operator is required for transplanting, resulting in a considerable saving.
- further savings derive from the fact that the planting of the pots 100 results in no salvaging, collection or disposal of the seed trays 1 is reauired as in the prior art, and of which the cost, even if modest, is abundantly amortized or recovered by the aforesaid savings.

Moreover the fact of planting the pots 100 offers further advantages. In particular, their constituent material maintains the soil soft and aerated when said material is disintegrated during the working of the soil for a subsequent transplant. Said material is not damaging to the plants and presents no contamination problems, after a few years it being completely degraded.

Moreover, the constituent material of the pot 100 is known to have excellent thermoinsulating properties, so that the plant can be transplanted without particular problems, even in environments, such as open soil, which can be at a temperature considerably different from that of the pot, because the pot forms a sort of "thermal jacket" which enables the plant to gradually adapt to the new environmental condition, without being subjected to sudden (and inconvenient) thermal shock.

Furthermore the fact of planting the plant together with its own pot prevents the plant undergoing "traumatic" stressing and/or stretching, which in combination with the "thermal jacket" function of the pot 100 means that the plant regains its optimum conditions for growth very quickly in the new environment.

A further but no less important advantage of transplanting the plant 5 together with its growth pot 100 derives from the fact that the constituent material of said pot, ie expanded polystyrene, is an excellent aggregating material for micro-organisms and/or bacteria usually present in the soil, and able to digest or transform contaminant products present therein.

Said products comprise, inter alia, organic contaminants which are transferred to the soil from the surrounding air, such as engine combustion products in general, and those from heating plants and installations.

Basically, the expanded polystyrene provides an ideal environment for the aggregation and growth of micro-organism and bacteria colonies able to digest and transform said contaminants, this being supported by studies and research aimed at identifying new pollution and purification technologies which are precisely based on the use of expanded polystyrene.

It must also be added that because the plant is transplanted together with its own growth pot, this later can be only partially buried, ie with its upper part projecting beyond the site level, so that the synthetic mulching sheet (laid during the operation of the transplanting machine 777) rests against the top of the pot, hence remaining spaced from the lower leaves of the plant. In contrast, if the plants alone are transplanted (with simultaneous laying of the mulching sheet) in accordance with the known art, the plants have very often to be planted to such a depth that the lower part of their foliage rests against said sheet, which is damaging to the plant, firstly because said lower foliage is not well aerated and secondly because it may be excessively heated by said sheet when this heats up by the effect of the suns's rays, which on the one hand may retard normal growth of the plant, and on the other hand may result in the loss of an eatable part of the product, such as in the case of small-leaf lettuce or another similar product.

The invention is not limited to that illustrated and described, but also comprises those modifications and improvements included in the following claims.

## Claims

1. A method for transplanting plants (5) germinated in seed trays (1) consisting of a rectangular slab of expanded synthetic material comprising an ordered plurality of seed cells (2), characterised in that the seed trays, with the plants contained in their respective cells together with their growth layer (7), are divided into a number of portions or pots (100) equal to the number of seed cells, after which said pots are planted automatically.

2. A method as claimed in claim 1, characterised in that said cells (2) have a holed base.

3. A method as claimed in claim 1, characterised in that said cells (2) have a closed base.

4. A method as claimed in claim 2, particularly for planting operations, characterised in that said closed base of the seed trays (2) is at least partly eliminated before said planting.

5. A method as claimed in claim 1, characterised in that after said division but before said planting, said pots are positioned in an ordered manner on a high-capacity disposable support to be transferred to the transplanting or re-potting site.

6. Means for implementing the method in accordance with claims 1 to 5, characterised by comprising, starting with an available supply of seed trays having n rows and m columns of seed cells (2) with a holed or unholed base, at least one cutting unit arranged to divide each seed tray into said pots; an ordering unit for creating an alignment of equidistant pots; at least one storage unit for the temporary ordered accumulation of a plurality of pots; and a unit (777) for automatically planting the pots with the respective plants contained therein.

7. Means as claimed in claim 6, characterised in that said at least one cutting unit comprises a horizontal grid of crossed heated wires which is driven with to-and-fro movement relative to an underlying horizontal operating table along which the seed trays slide.

8. Means as claimed in claim 6, characterised in that said at least one cutting unit comprises a first cutting unit arranged to divide the seed tray (1) into a number of strips (10) equal to the number of rows or columns of cells (2) present in said seed tray, and a second cutting unit arranged to divide said strips into the corresponding number of pots.

9. Means as claimed in claim 6, characterised in that said first and second cutting unit each consist of a series of equidistant vertical heated wires associated with said slide table (8), one unit being arranged to divide the seed trays (1) into said strips (10), the other unit being arranged to divide said strips (10) into said pots (100).

10. Means as claimed in claim 8, characterised in that said first and second cutting unit each comprise a set of equidistant, coaxial rotary circular blades (92; 192) extending beyond said operating table (8), which is provided with pusher members (88; 188) for advancing said seed trays and said strips respectively.

11. Means as claimed in claim 10, characterised in that each of said sets of blades comprises a number of blades greater by one than the number of cells present in the rows or columns of the seed tray.

12. Means as claimed in claim 11, characterised in that the outer or end blades (92; 192) of each of said set of blades are thicker than the corresponding intermediate blades so as to crumble the excess material (111; 12) present along the marginal peripheral edge of the seed trays (1).

13. Means as claimed in claim 10, typically for seed trays (1) provided with cells (2) having a holed base and a solid side wall, characterised in that each intermediate blade (92) of said first cutting unit comprises a central cutting edge (1000) for separating a strip (10) from the seed tray (1), and two opposing lateral cutting edges (1001) of lesser diameter for forming, in the side wall of each cell, respective apertures (1003) which open to the outside.

14. Means as claimed in claim 6, characterised in that said ordering unit comprises a moving flexible element (15) extending endlessly about pulleys (150) of vertical axis and provided with an outer surface of high friction coefficient which has a rectilinear portion facing a parallel slide guide for the pots, and spaced from this latter by a distance practically equal to the corresponding transverse dimension of the pots.

15. Means as claimed in claim 14, characterised in that said moving flexible element consists of a band, the outer surface of which comprises a plurality of small projecting metal points (152).

16. Means as claimed in claim 14, characterised in that said guide comprises a plurality of equidistant flat parallel elements (140) which form a series of channels arranged to receive the rows of pots leaving said second cutting unit.

17. Means as claimed in claim 16, characterised in that said plurality of equidistant parallel elements is provided by a finned belt (14) driven with stepwise movement.

18. Means as claimed in claim 6, typically for working seed trays with closed base cells (2), characterised in that upstream of said ordering unit there is positioned a unit for at least partly breaking said closed base of the cells.

19. Means as claimed in claim 18, characterised in that said breaking unit consists of a milling cylinder rotating about a horizontal axis, which height-adjustably projects beyond the upper face of said operating table (8), or above a seed tray arrival platform positioned upstream of this latter.

20. Means as claimed in claim 6, characterised in that said at least one storage unit comprises a transport line (44), of which the upstream end is arranged to grip the pots leaving said ordering unit, and the downstream end is arranged to position these latter on an accumulator device (55) which when filled is associated with said automatic transplanting unit.

21. Means as claimed in claim 20, characterised in that said transport line (44) comprises a moving flexible element (17) extending endlessly about pulleys of vertical axis and provided with an outer surface of high friction coefficient and having a rectilinear portion facing a guide (16) against which the pots advanced by said flexible element rest, the downstream end of said guide assuming the form of a flat strip (160) provided for correctly locating the pots on said accumulator device (55).

22. Means as claimed in claim 20, characterised in that said accumulator device (55) comprises a hollow cylindrical structure (50) provided externally with a helically extending seat (52) arranged to engage the lower portion of said pots, said accumulator device being removably positioned on a support and drive implement arranged to maintain it in a loaded configuration in which it is positioned tangential to the downstream end of said transport line, and to subject it to a screwing movement at a peripheral rotational speed equal to the speed of movement of said transport line.

23. Means as claimed in claim 22, characterised in that said helically extending seat consists of a channel-shaped body formed of an elastically deformable material and having a width practically equal to the corresponding transverse dimension of the pots, its side walls being internally provided with small projections (77) arranged to penetrate into the constituent material of the pots and its base wall comprising two total-length opposing fins (1) acting as a support for the pots (100) and between which there is formed a channel (104) for receiving an extractor member, one of said side walls having a total-length salient lip (880) which passes beyond the outer face of the wall to which it is attached and is intended to be inclined outwards by the flat band (160) provided for locating the pots.

24. Means as claimed in claim 22, characterised in that said implement comprises a clamping device, the jaws (66) of which are arranged to tighten against the opposing ends of said accumulator device, motor means for rotating said accumulator device about itself supported by said jaws, and a movable structure which carries these latter and is arranged to cause the accumulator device to slide parallel to its longitudinal axis.

25. Means as claimed in claim 22, characterised in that said implement comprises, for temporarily receiving at least one accumulator device (55), a horizontal drum (500) coupled by a male-female screw engagement to a stationary central shaft (301), and rotated by at least one parallel rod (306) rotated about said shaft (301) and slidingly received in a respective engagement seat in said drum.

26. Means as claimed in claim 6, typically for re-potting said plants with their respective pots in cells (or pots) of larger dimensions, characterised in that said automatic planting unit comprises at least one support and operating implement for at least one accumulator device (55) filled with pots, at least one unloading device (440) for removing said pots from said accumulator device, and at least one support for supporting an ordered plurality of said larger-dimension cells (or pots) and arranged to move relative to the downstream end of said at least one unloading device in synchronism with the arrival of the pots presented by this latter.

27. Means as claimed in claim 6, typically for transplanting said plants, in which said automatic planting unit (777) comprises a towed or carried frame provided with automatic planting means (888) for plants, characterised by comprising at least one support and operating implement for at least one accumulator device filled with pots, and at least one unloading device (440) arranged to remove said pots from said accumulator device and to present them to said planting means.

28. Means as claimed in claims 26 and 27, characterised in that said implement comprises means for supporting the accumulator device in an unloaded configuration in which it is positioned tangential to said unloading device, means for rotating the accumulator device about itself, and means for simultaneously causing said accumulator device to move parallel to itself.

29. Means as claimed in claims 26 and 27, characterised in that said implement comprises, for temporarily receiving at least one accumulator device (55), a horizontal drum (500) coupled by a male-female screw engagement to a stationary central shaft (301), and rotated by at least one parallel rod (306) rotated about said shaft (301) and slidingly received in a respective engagement seat in said drum.

30. Means as claimed in claims 26 and 27, characterised in that said unloading device (440) comprises a moving flexible element provided with an outer surface of high friction coefficient, and facing a counteracting guide against which the pots advanced by said element rest, the upstream end of said guide comprising a member arranged to outwardly incline the lip (888) of said helical seat (15) just before the intervention of said element, and a member (106) to be tangentially inserted into the base channel (104) of said seat (52) in order to support the pots (100) directed towards said planting means (888).

31. Means as claimed in claim 27, characterised in that said at least one support and operating implement is formed and dimensioned in such a manner as to receive a number of accumulator devices (55) equal to the number of individual planting means (888) associated with said automatic planting unit (777), between each planting means (888) and the respective accumulator device (55) there being interposed a corresponding unloading device (440).

32. Means as claimed in claim 27, characterised in that said at least one support and operating implement is formed and dimensioned in such a manner as to receive a single accumulator device (55) with which a corresponding unloading device (440) is associated, between this latter and the single planting means (888) there being interposed a deviator unit arranged to direct the arriving pots towards said single planting means.

33. Means as claimed in claim 6, characterised by comprising transfer table means for the ordered arrangement of the full and empty accumulator devices (55) respectively directed towards and originating from said automatic planting unit.

34. Means as claimed in claim 33, characterised in that said transfer table means comprise a platform mounted on wheels, such as a truck self-propelled or not, on which there is removably positioned a framework (330) provided with compartments for receiving an ordered plurality of accumulator devices, said platform being provided with a system for moving said framework.

35. Means as claimed in claims 26 and 27, characterised in that said automatic planting unit (777) is provided with a system for moving the full and empty accumulator devices between said at least one support and operating implement, and said framework (330).
